# EUROPEAN PATENT APPLICATION

(11) **EP 4 156 676 A1**
(43) Date of publication of application: **29.03.2023**
(21) Application number: 20936302.7
(22) Date of filing: 20.05.2020
(51) Int. Cl.: H04N 5/64

(54) **GOGGLES**

(71) Applicant: Sony Group Corporation, Minato-Ku, Tokyo, 108-0075 (JP)
(72) Inventor: OTANI, Yusuke, Tokyo 108-0075 (JP)
(74) Representative: 2SPL Patentanwälte PartG mbB
(86) International application number: PCT/JP2020/019995
(87) International publication number: WO 2021/234871

(57) **Abstract**

Goggles include: a holding member that holds lenses, a pad partially fixed to the holding member; an attaching member disposed on a side of the holding member opposite to the pad, the attaching member to which an electronic device that provides an image to the lenses can be attached; and a fixing member that fixes positions of the pad and the attaching member with respect to the holding member in a state where the pad and the attaching member are separated from the holding member and releases position fixation of the pad and the attaching member in response to a predetermined releasing operation.

## Description

### Field

The present disclosure relates to goggles. Background

There are known goggles having a virtual reality (VR) function to which an electronic device such as a smartphone can be attached and causes a user to view a virtual reality (VR) image provided from the electronic device through lenses. Examples of goggles of this type include so-called folding goggles in which a holding member that holds lenses and an attaching member, to which an electronic device that provides a VR image to the lenses can be attached, are coupled via a plurality of foldable links.

### Citation List

### Patent Literature

Patent Literature 1: Japanese Unexamined Patent Publication No. 2020-503707

### Summary

### Technical Problem

However, in the above conventional technology, since the operation of unfolding and folding the plurality of links is complicated, there is a problem that it is difficult to smoothly change the shape of the entire goggles between an unfolded state and a folded state.

Therefore, the present disclosure proposes goggles capable of implementing smooth shape change. Solution to Problem

Goggles includes: a holding member that holds lenses; a pad partially fixed to the holding member; an attaching member disposed on a side of the holding member opposite to the pad, the attaching member to which an electronic device that provides an image to the lenses can be attached; and a fixing member that fixes positions of the pad and the attaching member with respect to the holding member in a state where the pad and the attaching member are separated from the holding member and releases position fixation of the pad and the attaching member in response to a predetermined releasing operation.

### Brief Description of Drawings

FIG. 1 is a perspective view illustrating the appearance of goggles according to a first embodiment.
FIG. 2 is a perspective view illustrating the appearance of the goggles according to the first embodiment.
FIG. 3 is a perspective view illustrating an internal structure of the goggles when the goggles according to the first embodiment are in an unfolded state.
FIG. 4 is a diagram for explaining a procedure for releasing the position fixation of a pad and an attaching member in the first embodiment.
FIG. 5 is a perspective view illustrating the appearance of the goggles according to the first embodiment when the goggles are in a folded state.
FIG. 6 is a perspective view illustrating the appearance of goggles according to a second embodiment.
FIG. 7 is a perspective view illustrating the appearance of the goggles according to the second embodiment.
FIG. 8 is a perspective view illustrating an internal structure of the goggles when the goggles according to the second embodiment are in an unfolded state.
FIG. 9 is a diagram for explaining a procedure for releasing the position fixation of a pad and an attaching member in the second embodiment.
FIG. 10 is a plan view illustrating the appearance of the goggles according to the second embodiment when the goggles are in a folded state.
FIG. 11 is a perspective view illustrating the appearance of the goggles according to the second embodiment when the goggles are in a folded state. Description of Embodiments

Hereinafter, embodiments of the present disclosure will be described in detail on the basis of the drawings. Note that in each of the following embodiments, the same parts are denoted by the same symbols, and redundant description will be omitted.

In addition, the present disclosure will be described in the following order of items.
1. First Embodiment
   1-1. Configuration of Goggles According to First Embodiment
   1-2. Procedure for Releasing Position Fixation
   1-3. Effects of First Embodiment
2. Second Embodiment
   2-1. Configuration of Goggles According to Second Embodiment
   2-2. Procedure for Releasing Position Fixation
   2-3. Effects of Second Embodiment

### (1. First Embodiment)

### [1-1. Configuration of Goggles According to First Embodiment]

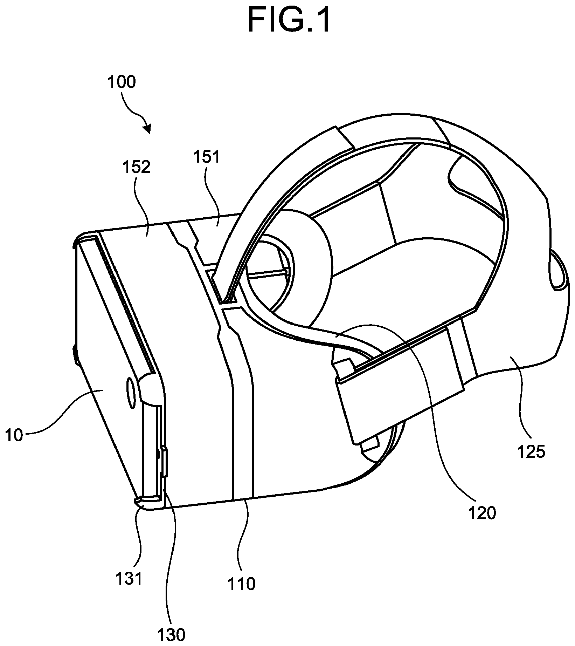

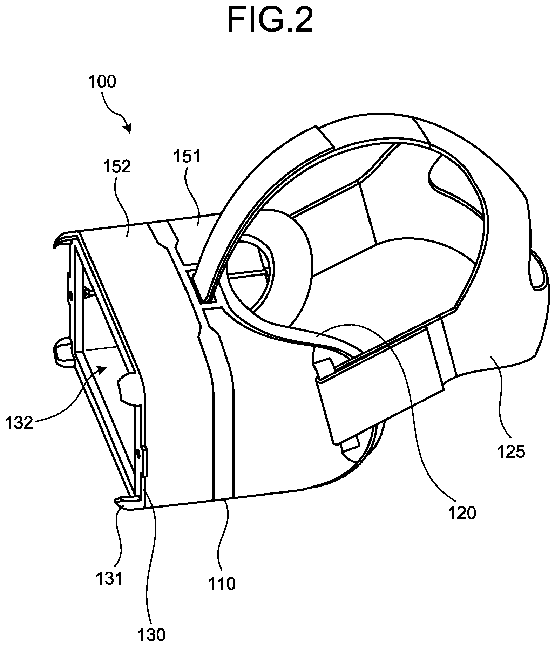

FIGS. 1 and 2 are perspective views illustrating the appearance of goggles 100 according to a first embodiment. The goggles 100 illustrated in FIGS. 1 and 2 are goggles to which an electronic device 10 such as a smartphone can be attached and having a VR function of causing a user to view a VR image provided from the electronic device 10 through lenses. Illustrated in FIG. 1 is a state in which the electronic device 10 is attached to the goggles 100, and illustrated in FIG. 2 is a state in which the electronic device 10 is not attached to the goggles 100. Note that, in the following description, a face located on the electronic device 10 side when the electronic device 10 is attached to the goggles 100 will be referred to as a "front face", and a face located on the opposite side of the electronic device 10 will be referred to as a "rear face", and the front-rear direction and the left-right direction are defined in accordance with this.

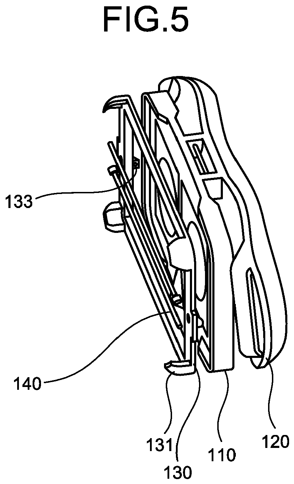

The goggles 100 illustrated in FIGS. 1 and 2 include a holding member 110 that holds lenses, a pad 120 that can abut on a face portion of a user, and an attaching member 130 to which the electronic device 10 that provides a VR image to the lenses can be attached. The goggles 100 can change its shape between a state of being unfolded in the front-rear direction and a state of being folded by moving the holding member 110, the pad 120, and the attaching member 130 away from and close to each other in the front-rear direction. That is, the positions of the pad 120 and the attaching member 130 with respect to the holding member 110 are fixed by a fixing member to be described later in a state where the pad 120 and the attaching member 130 are separated from the holding member 110, whereby the goggles 100 are in the unfolded state illustrated in FIGS. 1 and 2. On the other hand, when the position fixation of the pad 120 and the attaching member 130 by the fixing member is released, the pad 120 and the attaching member 130 are brought close to the holding member 110, thereby allowing the goggles 100 to be changed from the unfolded state to the folded state (see FIG. 5).

The goggles 100 further include a first cover member 151, which shields a space between the holding member 110 and the pad 120, and a second cover member 152, which shields a space between the holding member 110 and the attaching member 130. The first cover member 151 and the second cover member 152 are elastic and extend when the goggles 100 are in the unfolded state and contract when the goggles 100 are in the folded state. As a result, even when the goggles 100 are in either the unfolded state or the folded state, the space between the holding member 110 and the pad 120 and the space between the holding member 110 and the attaching member 130 are not exposed.

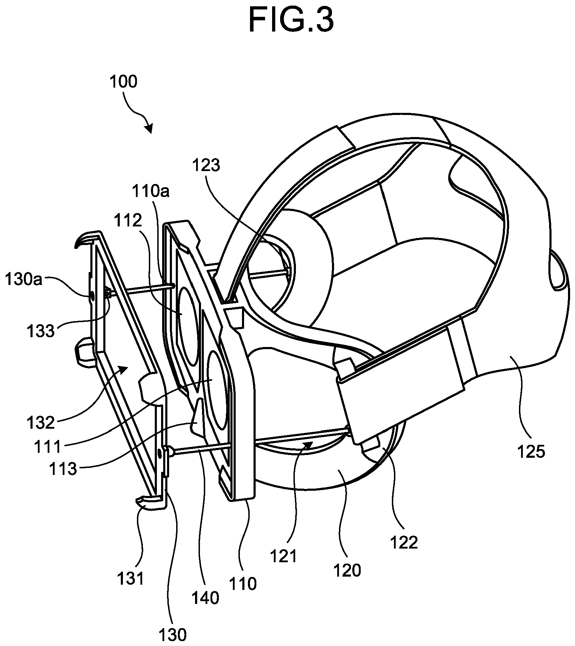

FIG. 3 is a perspective view illustrating an internal structure of the goggles 100 when the goggles 100 according to the first embodiment are in an unfolded state. In FIG. 3, for convenience, illustration of the first cover member 151 and the second cover member 152 is omitted. As illustrated in FIG. 3, in the goggles 100, the positions of the pad 120 and the attaching member 130 with respect to the holding member 110 are fixed by fixing members 140.

The holding member 110 is a substantially rectangular frame member and holds lenses 111 and 112 that can be visually recognized by a user with the left and right eyes. In the following description, a direction in which the lenses 111 and 112 are arranged is referred to as a left-right direction. At the center of the holding member 110 in the left-right direction, a nose guard portion 113 that can be worn on the user's nose is included so as to be interposed between the lenses 111 and 112. Holes 110a into which the fixing members 140 are inserted are formed at both ends of the holding member 110 in the left-right direction.

The pad 120 is formed of a flexible material, and a part thereof is fixed to the holding member 110. Specifically, the pad 120 is fixed, at a central portion in the left-right direction, to a beam portion protruding rearward from a central portion in the left-right direction of the rear face of the holding member 110. Openings 121 are formed in the pad 120 at positions corresponding to the lenses 111 and 112. A cushion member is provided on the rear face of the pad 120 so as to surround the openings 121. When the pad 120 abuts the face of the user, the cushion member provided on the rear face of the pad 120 contacts the face of the user. As a result, the wearing feeling of the pad 120 can be improved. Recesses 123 that house ends of the fixing members 140 inserted in the holes 110a of the holding member 110 are formed at both ends of the pad 120 in the left-right direction. The pad 120 further includes a band 125 that covers the temporal regions and the top of the head of the user as a mounting tool for mounting the goggles 100 on the head of the user. The band 125 is detachably attached to the pad 120 via, for example, attachment rings 122 or the like provided at both ends of the pad 120 in the left-right direction. Note that the structure of the band 125 is not limited this and may be a structure having a shape covering only the temporal regions of the user or a hook-shaped structure to be hooked on ears like temples of eyeglasses, and furthermore, the band 125 may be omitted.

The attaching member 130 is a substantially rectangular frame member, is disposed on the opposite side of the pad 120 of the holding member 110, and is structured so as to allow the electronic device 10 to be attached thereto. That is, claw portions 131 are formed at four corners on the front face of the attaching member 130, and the electronic device 10 is attached to the attaching member 130 with the electronic device 10 locked by the claw portions 131. An opening 132 is included at a position corresponding to the lenses 111 and 112 of the attaching member 130. A VR image is provided from the electronic device 10 attached to the attaching member 130 to the lenses 111 and 112 via the opening 132. Holes 130a into which the fixing members 140 are inserted are formed at both ends of the attaching member 130 in the left-right direction. A lock mechanism that locks the fixing members 140 inserted into the holes 130a and restricts the movement of the fixing members 140 is provided inside the holes 130a of the attaching member 130. The attaching member 130 further includes a release button 133 for releasing the lock of the fixing members 140 in the holes 130a by the lock mechanism.

The fixing members 140 fix the positions of the pad 120 and the attaching member 130 with respect to the holding member 110 in a state where the pad 120 and the attaching member 130 are separated from the holding member 110. Specifically, a fixing member 140 is formed in a rod shape. Moreover, a fixing member 140 is inserted into each of a hole 110a of the holding member 110 and a hole 130a of the attaching member 130, abuts on the pad 120, and is locked in the hole 130a of the attaching member 130, thereby fixing the positions of the pad 120 and the attaching member 130. By fixing the positions of the pad 120 and the attaching member 130 by the fixing members 140, a state in which the pad 120 and the attaching member 130 are separated from the holding member 110 can be easily maintained. As a result, the goggles 100 can be smoothly changed from the folded state to the unfolded state. Note that when the fixing members 140 abut on the pad 120, the ends of the fixing members 140 are housed in the recesses 123 of the pad 120. As a result, a positional shift of the ends of the fixing members 140 is suppressed.

Meanwhile, the fixing members 140 release the position fixation of the pad 120 and the attaching member 130 in response to a predetermined releasing operation. This allows the pad 120 and the attaching member 130 to easily approach the holding member 110. As a result, the goggles 100 can be smoothly changed from the unfolded state to the folded state.

### [1-2. Procedure for Releasing Position Fixation]

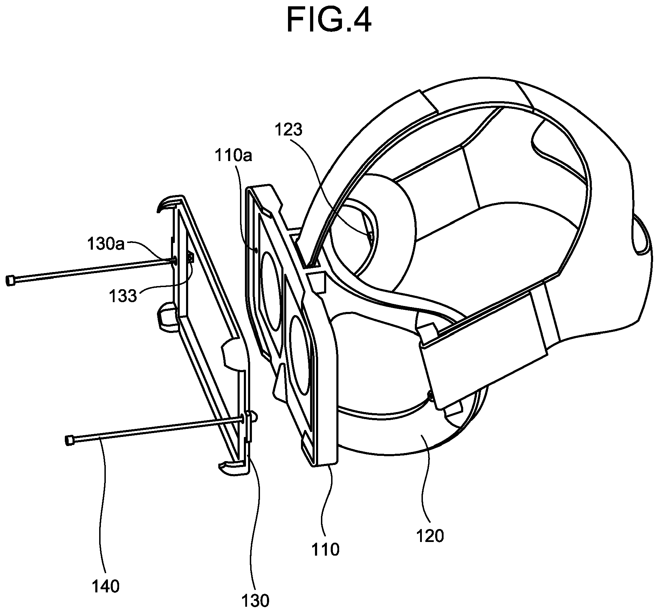

Here, a procedure for releasing the position fixation of the pad 120 and the attaching member 130 will be described with reference to FIG. 4. FIG. 4 is a diagram for explaining a procedure for releasing the position fixation of the pad 120 and the attaching member 130 in the first embodiment.

When the goggles 100 are in the unfolded state illustrated in FIG. 3, a fixing member 140 is inserted in each of a hole 110a of the holding member 110 and a hole 130a of the attaching member 130, abuts on the pad 120, and is locked in the hole 130a of the attaching member 130. That is, in the state of FIG. 3, the positions of the pad 120 and the attaching member 130 with respect to the holding member 110 are fixed by the fixing members 140. When the release button 133 is pressed in this state, the lock of the fixing members 140 in the holes 130a of the attaching member 130 is released, thereby allowing the fixing members 140 to be removed. Then, as illustrated in FIG. 4, the fixing members 140 are removed from the holes 110a of the holding member 110 and the holes 130a of the attaching member 130. As a result, the position fixation of the pad 120 and the attaching member 130 is released. The release of the lock by the release button 133 and the removal of the fixing members 140 correspond to an example of the "predetermined releasing operation".

FIG. 5 is a perspective view illustrating the appearance of the goggles 100 according to the first embodiment when the goggles 100 are in the folded state. When the position fixation of the pad 120 and the attaching member 130 by the fixing members 140 is released, the pad 120 and the attaching member 130 are brought close to the holding member 110, and thus the goggles 100 are brought into the folded state illustrated in FIG. 5 from the unfolded state illustrated in FIG. 3. The fixing members 140 removed from the holes 110a of the holding member 110 and the holes 130a of the attaching member 130 are housed in the attaching member 130 in a state where the electronic device 10 is not attached. That is, the fixing members 140 that have been removed are stored in a space surrounded by the claw portions 131 on the front face of the attaching member 130.

### [1-3. Effects of First Embodiment]

As described above, the goggles 100 according to the first embodiment include the holding member 110, the pad 120, the attaching member 130, and the fixing members 140. The holding member 110 holds the lenses 111 and 112. A part of the pad 120 is fixed to the holding member 110. The attaching member 130 is disposed on a side of the holding member 110 that is opposite to the pad 120 and is structured so as to allow the electronic device 10 that provides an image to the lenses 111 and 112 to be attached thereto. The fixing members 140 fix the positions of the pad 120 and the attaching member 130 with respect to the holding member 110 in a state where the pad 120 and the attaching member 130 are separated from the holding member 110. Moreover, the fixing members 140 receive the predetermined releasing operation and release the position fixation of the pad 120 and the attaching member 130. As a result, the separation and proximity of the pad 120 and the attaching member 130 with respect to the holding member 110 can be switched with a simple operation, and thus the shape of the goggles 100 can be quickly changed between the unfolded state and the folded state. As a result, the shape can be changed smoothly.

Furthermore, a fixing member 140 is formed in a rod shape. The fixing members 140 are inserted into the holes 110a and the holes 130a formed in the holding member 110 and the attaching member 130, respectively, abut on the pad 120, and are locked in the holes 130a of the attaching member 130, thereby fixing the positions of the pad 120 and the attaching member 130. As a result, the state in which the pad 120 and the attaching member 130 are separated from the holding member 110 can be easily maintained, and thus the goggles 100 can be smoothly changed from the folded state to the unfolded state.

Meanwhile, when the fixing members 140 receive the operation of releasing the lock in the holes 130a of the attaching member 130 and removing from the holes 110a of the holding member 110 and the holes 130a of the attaching member 130, the position fixation of the pad 120 and the attaching member 130 is released. This allows the pad 120 and the attaching member 130 to easily approach the holding member 110, and thus the goggles 100 can be smoothly changed from the unfolded state to the folded state.

Further, when the fixing members 140 are removed from the holes 110a of the holding member 110 and the holes 130a of the attaching member 130, the fixing members 140 are housed in the attaching member 130 in a state where the electronic device 10 is not mounted. As a result, the fixing members 140 that have been removed can be efficiently housed.

The attaching member 130 further includes the release button 133 for releasing the lock of the fixing members 140 in the holes 130a of the attaching member 130. This allows the fixing members 140 to be easily removed in response to the pressing of the release button 133.

The goggles 100 also include the first cover member 151 and the second cover member 152. The first cover member 151 is an elastic member that shields the space between the holding member 110 and the pad 120. The second cover member 152 is an elastic member that shields the space between the holding member 110 and the attaching member 130. As a result, even when the goggles 100 are in either the unfolded state or the folded state, the space between the holding member 110 and the pad 120 and the space between the holding member 110 and the attaching member 130 are not exposed, thereby allowing the aesthetic appearance of the goggles 100 to be maintained.

Note that in the first embodiment, the example in which a fixing member 140 is formed in a rod shape has been described, however, the shape of the fixing members 140 is not limited thereto. For example, the fixing members 140 may be formed in a hollow pipe shape. In this case, stretchable strings may be passed through the pipe-shaped fixing members 140, the holes 110a of the holding member 110, and the holes 130a of the attaching member 130 with first ends of the stretchable string fixed to ends of the pipe-shaped fixing members 140, and second ends may be fixed to the recesses 123 of the pad 120. As a result, the pipe-shaped fixing members 140 and the recesses 123 of the pad 120 are coupled via the stretchable strings, the fixing members 140 can be easily caused to abut on the pad 120.

Furthermore, in the first embodiment, an example in which the image provided from the electronic device 10 is a VR image has been described, however the disclosed technology is not limited thereto. For example, the image provided from the electronic device 10 may be an augmented reality (AR) image.

### (2. Second Embodiment)

Next, a second embodiment will be described. The second embodiment relates to a variation of the fixing member of the first embodiment.

### [2-1. Configuration of Goggles According to Second Embodiment]

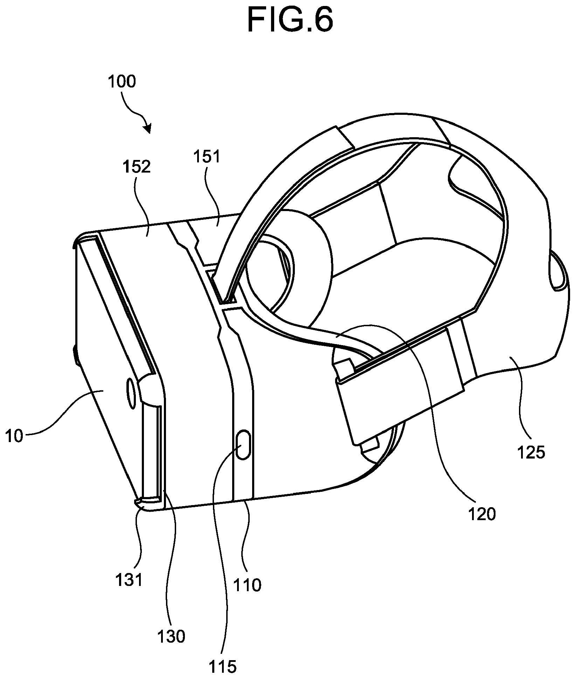

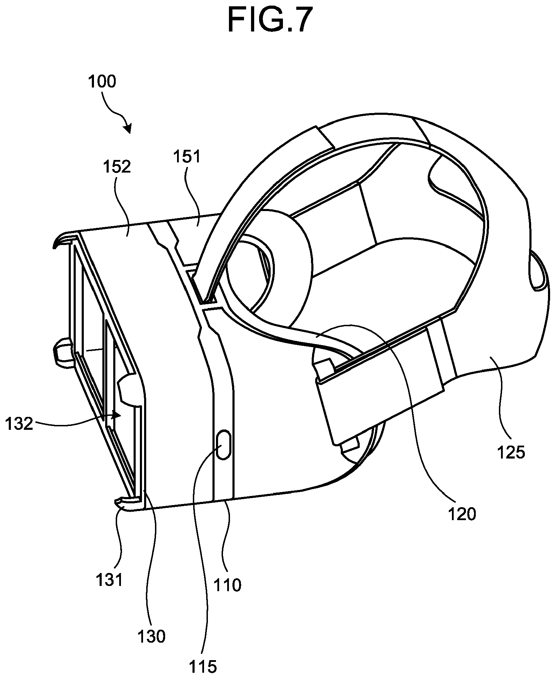

FIGS. 6 and 7 are perspective views illustrating the appearance of goggles 100 according to the second embodiment. Illustrated in FIG. 6 is a state in which an electronic device 10 is attached to the goggles 100, and illustrated in FIG. 7 is a state in which the electronic device 10 is not attached to the goggles 100.

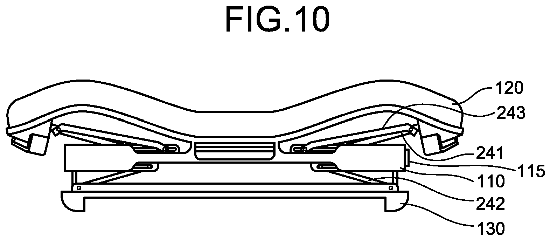

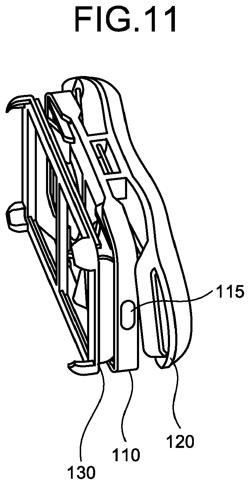

Similarly to the goggles 100 according to the first embodiment, the goggles 100 illustrated in FIGS. 6 and 7 can change its shape between a state of being unfolded in the front-rear direction and a state of being folded by moving a holding member 110, a pad 120, and an attaching member 130 away from and close to each other in the front-rear direction. That is, the positions of the pad 120 and the attaching member 130 with respect to the holding member 110 are fixed by a fixing member to be described later in a state where the pad 120 and the attaching member 130 are separated from the holding member 110, whereby the goggles 100 are in the unfolded state illustrated in FIGS. 6 and 7. On the other hand, when the position fixation of the pad 120 and the attaching member 130 by the fixing member is released, the pad 120 and the attaching member 130 are brought close to the holding member 110, thereby allowing the goggles 100 to be changed from the unfolded state to the folded state (see FIGS. 10 and 11). The goggles 100 illustrated in FIGS. 6 and 7 are different from the goggles 100 according to the first embodiment in the structure of fixing members.

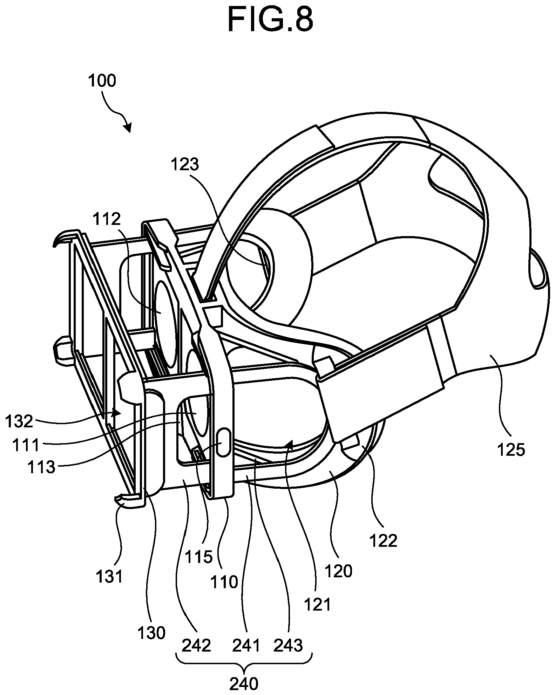

FIG. 8 is a perspective view illustrating an internal structure of the goggles 100 when the goggles 100 according to the second embodiment are in the unfolded state. In FIG. 8, for convenience, illustration of a first cover member 151 and a second cover member 152 is omitted. As illustrated in FIG. 8, in the goggles 100, the positions of the pad 120 and the attaching member 130 with respect to the holding member 110 are fixed by fixing members 240. Note that in the goggles 100 illustrated in FIG. 8, the holes 110a are not formed in the holding member 110, the holes 130a are not formed in the attaching member 130, and the recesses 123 are not formed in the pad 120.

A fixing member 240 includes a first movable unit 241, a second movable unit 242, and a third movable unit 243.

The first movable units 241 are rotatably coupled to the pad 120 and slidably coupled to the holding member 110. Specifically, the first movable units 241 are rotatably coupled to the pad 120 via rotation shafts provided at both ends on the front face of the pad 120 in the left-right direction. Moreover, the first movable units 241 are coupled to the holding member 110 so as to be slidable in the left-right direction via guide rails provided on the rear face of the holding member 110.

The second movable units 242 are rotatably coupled to the attaching member 130 and slidably coupled to the holding member 110. Specifically, the second movable units 242 are rotatably coupled to the attaching member 130 via rotation shafts provided at both ends in the left-right direction of the rear face of the attaching member 130. Moreover, the second movable units 242 are coupled to the holding member 110 so as to be slidable in the left-right direction via guide rails provided on the front face of the holding member 110.

The first movable units 241 and the second movable units 242 rotate and slide until the first movable units 241 and the second movable units 242 erect with respect to the holding member 110 in conjunction with the separation of the pad 120 and the attaching member 130 from the holding member 110 and are locked to the holding member 110. As a result, the first movable units 241 and the second movable units 242 fix the positions of the pad 120 and the attaching member 130. Specifically, when the pad 120 is separated from the holding member 110, the first movable units 241 rotate in the front-rear direction about the rotation shafts on the front face of the pad 120, slide in the left-right direction along the guide rails on the rear face of the holding member 110, and are erected with respect to the holding member 110. Then, the first movable units 241 are locked at the ends of the holding member 110 in a state of being erected with respect to the holding member 110. The first movable units 241 are automatically locked to the holding member 110 by lock mechanisms provided at the ends of the holding member 110. When the attaching member 130 is separated from the holding member 110, the second movable units 242 rotate in the front-rear direction about the rotation shafts on the rear face of the attaching member 130, slide in the left-right direction along the guide rails on the front face of the holding member 110, and are erected with respect to the holding member 110. Then, the second movable units 242 are locked at the ends of the holding member 110 in a state of being erected with respect to the holding member 110. The second movable units 242 are automatically locked to the holding member 110 by lock mechanisms provided at the ends of the holding member 110. With the first movable units 241 and the second movable units 242, in the state of being erected with respect to the holding member 110, being locked, the positions of the pad 120 and the attaching member 130 with respect to the holding member 110 are fixed. In this manner, the positions of the pad 120 and the attaching member 130 are fixed by the first movable units 241 and the second movable units 242 in conjunction with the separation of the pad 120 and the attaching member 130 from the holding member 110. As a result, a state in which the pad 120 and the attaching member 130 are separated from the holding member 110 can be easily maintained. As a result, the goggles 100 can be smoothly changed from the folded state to the unfolded state.

In addition, the first movable units 241 and the second movable units 242 release the position fixation of the pad 120 and the attaching member 130 in response to a predetermined releasing operation. This allows the pad 120 and the attaching member 130 to easily approach the holding member 110. As a result, the goggles 100 can be smoothly changed from the unfolded state to the folded state. A procedure for releasing the position fixation of the pad 120 and the attaching member 130 by the first movable units 241 and the second movable units 242 will be described later.

The third movable units 243 are rotatably coupled to the pad 120 together with the first movable units 241 and are slidably coupled to the holding member 110 together with the first movable units 241. Specifically, the third movable units 243 are rotatably coupled to the pad 120 via the rotation shafts provided at the both ends on the front face of the pad 120 in the left-right direction together with the first movable units 241. Moreover, the third movable units 243 are coupled to the holding member 110 so as to be slidable in the left-right direction together with the first movable units 241 via guide rails provided on the rear face of the holding member 110. The third movable units 243 fix the position of the pad 120 together with the first movable units 241 when rotated and slid, in conjunction with the separation of the pad 120 from the holding member 110, together with the first movable units 241 until the third movable units 243 are obliquely erected with respect to the holding member 110. As a result, the third movable units 243 can assist fixation of the position of the pad 120 by the first movable units 241. Note that the third movable units 243 may be omitted as necessary.

The holding member 110 further includes a release button 115 for releasing the lock of the first movable units 241 and the second movable units 242 to the holding member 110.

### [2-2. Procedure for Releasing Position Fixation]

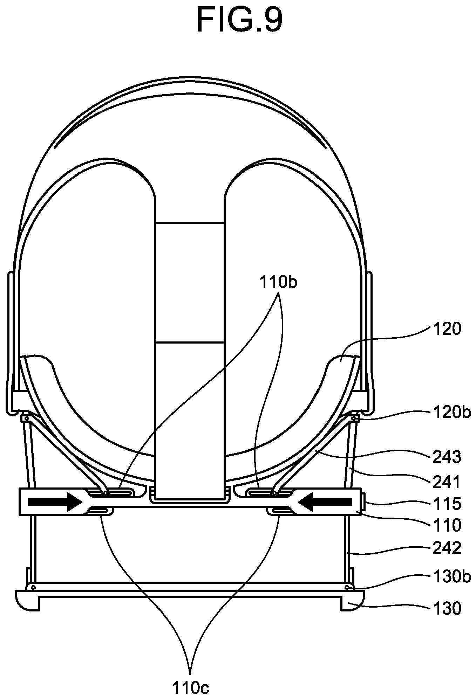

Here, a procedure for releasing the position fixation of the pad 120 and the attaching member 130 will be described with reference to FIG. 9. FIG. 9 is a diagram for explaining a procedure for releasing the position fixation of the pad 120 and the attaching member 130 in the second embodiment.

When the goggles 100 are in the unfolded state illustrated in FIG. 8, the first movable units 241 and the second movable units 242 are rotated and slid until the first movable units 241 and the second movable units 242 are erected with respect to the holding member 110 and are locked to the holding member 110. That is, in the state of FIG. 8, the positions of the pad 120 and the attaching member 130 with respect to the holding member 110 are fixed by the first movable units 241 and the second movable units 242. When the release button 115 is pressed in this state, the lock of the first movable units 241 and the second movable units 242 to the holding member 110 is released, thereby allowing the first movable units 241 and the second movable units 242 to rotate and slide. Then, the first movable units 241 and the second movable units 242 are rotated and slid until the first movable units 241 and the second movable units 242 fall down along the holding member 110. Specifically, as indicated by an arrow in FIG. 9, the first movable unit 241 rotates about a rotation shaft 120b on the front face of the pad 120, slides inward in the left-right direction along a guide rail 110b on the rear face of the holding member 110, and falls down along the holding member 110. At this point, the third movable units 243 are rotated and slid together with the first movable units 241 until the third movable units 243 fall down along the holding member 110. Meanwhile, as indicated by an arrow in FIG. 9, the second movable unit 242 rotates about a rotation shaft 130b on the rear face of the attaching member 130, slides inward in the left-right direction along a guide rail 110c on the front face of the holding member 110, and falls down along the holding member 110. As a result, the position fixation of the pad 120 and the attaching member 130 is released. The release of the lock by the release button 115 corresponds to an example of the "predetermined releasing operation".

FIG. 10 is a plan view illustrating the appearance of the goggles 100 according to the second embodiment when the goggles 100 are in the folded state. FIG. 11 is a perspective view illustrating the appearance of the goggles 100 when the goggles 100 according to the second embodiment are in the folded state. When the position fixation of the pad 120 and the attaching member 130 by the first movable units 241 and the second movable units 242 is released, the pad 120 and the attaching member 130 are brought close to the holding member 110 in conjunction with the falling of the first movable units 241 and the second movable units 242. As a result, the goggles 100 shifts from the unfolded state illustrated in FIG. 8 to the folded state illustrated in FIGS. 10 and 11.

### [2-3. Effects of Second Embodiment]

As described above, the goggles 100 according to the second embodiment include the fixing member 240 having the first movable unit 241 and the second movable unit 242. The first movable units 241 are rotatably coupled to the pad 120 and slidably coupled to the holding member 110. The second movable units 242 are rotatably coupled to the attaching member 130 and slidably coupled to the holding member 110. The first movable units 241 and the second movable units 242 are rotated, slid, and locked until the first movable units 241 and the second movable units 242 are erected respect to the holding member 110 in conjunction with the separation of the pad 120 and the attaching member 130 from the holding member 110, thereby fixing the positions of the pad 120 and the attaching member 130. As a result, the goggles 100 can be smoothly changed from the folded state to the unfolded state in conjunction with the separation of the pad 120 and the attaching member 130 from the holding member 110.

In addition, when receiving an operation to unlock the first movable units 241 and the second movable units 242, the first movable units 241 and the second movable units 242 are rotated and slid until the first movable units 241 and the second movable units 242 fall down along the holding member 110, thereby releasing the position fixation of the pad 120 and the attaching member 130. As a result, the pad 120 and the attaching member 130 can be brought close to the holding member 110 in conjunction with the falling of the first movable units 241 and the second movable units 242, and thus the goggles 100 can be smoothly changed from the unfolded state to the folded state.

In addition, the holding member 110 includes the release button 115 that releases the lock of the first movable units 241 and the second movable units 242 with respect to the holding member 110. As a result, it is possible to easily allow the first movable units 241 and the second movable units 242 to slide and to rotate in response to pressing of the release button 115.

Note that the effects described herein are merely examples and are not limited, and other effects may also be achieved. That is, the technology according to the present disclosure can achieve other effects that are obvious to those skilled in the art from the description of the present specification together with or in place of the above effects.

Note that the present technology can also have the following configurations.

### Reference Signs List

- 10: ELECTRONIC DEVICE
- 100: GOGGLES
- 110: HOLDING MEMBER
- 115, 133: RELEASE BUTTON
- 110a, 130a: HOLE
- 111, 112: LENS
- 120: PAD
- 130: ATTACHING MEMBER
- 140, 240: FIXING MEMBER
- 151: FIRST COVER MEMBER
- 152: SECOND COVER MEMBER
- 241: FIRST MOVABLE UNIT
- 242: SECOND MOVABLE UNIT
- 243: THIRD MOVABLE UNIT

## Claims

1. Goggles comprising:
a holding member that holds lenses;
a pad partially fixed to the holding member;
an attaching member disposed on a side of the holding member opposite to the pad, the attaching member to which an electronic device that provides an image to the lenses can be attached; and
a fixing member that fixes positions of the pad and the attaching member with respect to the holding member in a state where the pad and the attaching member are separated from the holding member and releases position fixation of the pad and the attaching member in response to a predetermined releasing operation.

2. The goggles according to claim 1,
wherein the fixing member is formed in a rod shape and fixes positions of the pad and the attaching member when inserted in holes formed in the holding member and the attaching member respectively, abutting on the pad, and locked in the hole of the attaching member.

3. The goggles according to claim 2,
wherein the fixing member releases the position fixation of the pad and the attaching member when receiving an operation of releasing a lock in the hole of the attaching member and removal from the hole of the holding member and the hole of the attaching member as the releasing operation.

4. The goggles according to claim 3,
wherein the fixing member is housed in the attaching member in a state where the electronic device is not attached when removed from the hole of the holding member and the hole of the attaching member.

5. The goggles according to claim 3,
wherein the attaching member comprises a button for releasing the lock of the fixing member in the hole of the attaching member.

6. The goggles according to claim 1,
wherein the fixing member comprises:
a first movable unit rotatably coupled to the pad and slidably coupled to the holding member; and
a second movable unit rotatably coupled to the attaching member and slidably coupled to the holding member,
wherein the first movable unit and the second movable unit fix the positions of the pad and the attaching member by being rotated and slid until the first movable unit and the second movable unit are erected with respect to the holding member in conjunction with separation of the pad and the attaching member from the holding member and being locked to the holding member.

7. The goggles according to claim 6,
wherein the first movable unit and the second movable unit are rotated and slid until the first movable unit and the second movable unit fall down along the holding member to release the position fixation of the pad and the attaching member when receiving an operation of releasing the lock of the first movable unit and the second movable unit as the releasing operation.

8. The goggles according to claim 7,
wherein the holding member comprises a button for releasing the lock of the first movable unit and the second movable unit from the holding member.

9. The goggles according to claim 1, further comprising:
a first cover member that shields a space between the holding member and the pad, the first cover member being stretchable; and
a second cover member that shields a space between the holding member and the attaching member, the second cover member being stretchable.
